# EUROPÄISCHE PATENTANMELDUNG

(11) **EP 0 528 463 A1**
(43) Veröffentlichungstag der Anmeldung: **24.02.1993**
(21) Anmeldenummer: 92202230.6
(22) Anmeldetag: 21.07.1992
(51) Int. Cl.: B60R 16/02

(54) **Vorrichtung zur Übertragung von elektrischem Strom und Daten zwischen der Lenkrad- und der Fahrzeugseite eines Kraftfahrzeugs**

(30) Priorität: 21.08.1991 DE 4127647
(71) Anmelder: KOLBENSCHMIDT Aktiengesellschaft, D-74150 Neckarsulm (DE)
(72) Erfinder: Bossler, Hans Jürgen, W-6115 Münster 2 (DE); Kreuzer, Martin, W-8751 Kleinwallstadt (DE)
(74) Vertreter: Rieger, Harald, Dr.

(57) **Zusammenfassung**

Die Übertragung von elektrischem Strom und Daten in bidirektioneller Flußrichtung zwischen der Lenkrad- und der Fahrzeugseite eines Kraftfahrzeugs erfolgt mittels eines elektromechanischen Drehübertragers und mehrerer im Lenkrad integrierter Tastschalter (8-11). Um eine störungsfreie Übertragung zu erreichen, ist auf der Lenkrad- und der Fahrzeugseite jeweils ein aus einem Mikrocontroller und einem Bus (6) bestehendes Interface-Modul (3,4) angeordnet, die durch den Bus miteinander kommunizieren, wobei die Tastschalter (8-11) unmittelbar auf die entsprechenden Eingänge des lenkradseitigen Interface-Moduls (3,4) und die Ausgänge des fahrzeugseitigen Interface-Moduls auf die entsprechenden Kommunikationspartner geführt sind.

## Beschreibung

Die Erfindung betrifft eine Vorrichtung zur Übertragung von elektrischem Strom und Daten in bidirektioneller Flußrichtung zwischen der Lenkrad- und der Fahrzeugseite eines Kraftfahrzeugs mittels eines elektromechanischen Drehübertragers und mehrerer im Lenkrad integrierter Tastschalter mit ggf. zugeordneten Leuchtdioden.

Das Streben nach erhöhter Bedienungs- und Verkehrssicherheit hat dazu geführt, daß bei Kraftfahrzeugen üblicherweise im Armaturenbrett eingebaute Anzeige- und/oder Betätigungselemente im Lenkrad, vorzugsweise in dessen Prallplatte, untergebracht sind, deren elektrische Anschlüsse über geeignete Drehverbindungen zwischen Lenkrad und Lenkwelle an das Bordnetz herausgeführt sind (DE-U-7 805 602). Aus der DE-A-2 758 698 ist ein Lenkrad mit in der Prallplatte eingebauten Berührungsschaltern bekannt, die Bestandteil von Sendern sind. Mittels dieser Sender lassen sich Daten auf im Armaturenbrett angeordnete Empfänger übertragen, die jeweils mit einer Decodiereinrichtung verbunden sind. Über die Decodiereinrichtungen kann beispielsweise eine elektronische Ziffernanzeige im Armaturenbrett angesteuert werden, die für Mehrfach-Informationen, wie Kilometerstand, Tageskilometerstand, Uhrzeit, Temperatur und/oder Radiofrequenz, benutzbar ist. In der DE-C-3 726 336 ist ein Lenkrad vorgesehen, bei dem in der Prallplatte ein Tast-Bildschirm eingesetzt ist, auf dem die Anzeige- und Betätigungselemente als Symbole erzeugt werden und unter dem mehrere Sensoren angebracht sind. Die Signalübertragung erfolgt berührungsfrei mittels elektromagnetischer Signale oder über Schleifringe. Die EP-B-0 119 350 befaßt sich mit einer multifunktionalen Lenkradanordnung, bei der die Prallplatte eine Vielzahl einzelner mit einem Sender verbundener Tastschalter enthält. An der Lenksäule ist ein Empfänger mit Fototransistor befestigt, der die vom Sender ausgehenden Signale empfängt. Ein Decodierbaustein nimmt die vom Empfänger ausgehenden Signale auf und sendet sie über entsprechende Ausgangsanschlüsse zu den entsprechenden fahrzeugseitig angebrachten Kommunikationspartnern. Die Ausgangsimpulse lassen sich über in der Prallplatte des Lenkrads befindliche Lichtdioden anzeigen.

Es ist die Aufgabe der vorliegenden Erfindung, eine Vorrichtung bereitzustellen, mit der insbesondere serielle Daten und Signale in bidirektioneller Flußrichtung zwischen der Lenkrad- und der Fahrzeugseite eines Kraftfahrzeugs störungsfrei und sicher übertragbar sind.

Die Lösung dieser Aufgabe erfolgt mittels eines elektromechanischen Drehübertragers, vorzugsweise mittels Wickelfeder oder Schleifringen, der jeweils einen Pol für die elektrische Stromversorgung, die Datenübertragung und die Fahrzeugmasse umfaßt, wobei auf der Lenkrad- und der Fahrzeugseite jeweils ein Interface-Modul, im wesentlichen bestehend aus einem Mikrocontroller und einem auf einem speziellen Kommunikationsprotokoll basierenden Bus, angeordnet ist, die Interface-Module vermittels des Bus miteinander kommunizieren, die Tastschalter und Leuchtdioden unmittelbar auf die entsprechenden Eingänge des lenkradseitigen Interface-Moduls und die Ausgänge des fahrzeugseitigen Interface-Moduls auf die Eingänge der entsprechenden Kommunikationspartner geführt sind.

Als Bus wird vorzugsweise ein ABUS oder CAN-BUS ASIC benutzt.

Im Lenkrad befinden sich Tastschalter für das Ein-/Ausschalten, für die Senderwahl sowie für das Erhöhen und Verringern der Lautstärke des Rundfunkgeräts.

Es ist auch möglich, im Lenkrad einen Tastschalter für den akustischen Signalgeber vorzusehen.

Der elektromechanische Drehübertrager spielt nur eine untergeordnete Rolle im Hinblick auf die Datensicherheit, da es sich um digitale Informationen handelt.

Eine vorzugsweise Ausgestaltung der erfindungsgemäßen Vorrichtung besteht darin, daß der elektromechanische Drehübertrager mit einem zusätzlichen Pol ausgestattet ist, über den ein auf der Lenkradseite befindliches, vorzugsweise im Lenkrad eingebautes Mikrofon mit einer auf der Fahrzeugseite angebrachten, mit den Rundfunklautsprechern gekoppelten, freisprechenden Funktelefonanlage verbunden ist.

Im Lenkrad befindet sich wenigstens ein Tastschalter, über den eine gespeicherte Telefonnummer aufrufbar ist.

Zusätzlich können weitere Tastschalter im Lenkrad vorgesehen sein, mit deren Hilfe ein Ringmenü zur Herstellung einer Freisprech-Telefonverbindung durch das Aufrufen des Namens bzw. eines anderen Codes eines Gesprächsteilnehmers möglich ist. Das Ringmenü besteht beispielsweise aus je einem Menüpunkt für die Sprachwahl, für Einträge, für Programmierfunktionen und für ein Telefonbuch.

Zweckmäßigerweise sind die Tastschalter und ggf. Leuchtdioden in die Prallplatte des Lenkrads integriert.

Ebenso ist es möglich, das Mikrofon im Lenkrad anzuordnen.

Es ist von Vorteil, wenn der akustische Signalgeber durch die Betätigung der Prallplatte des Lenkrads ausgelöst wird.

Die Erfindung ist im Folgenden näher und beispielhaft erläutert. Es zeigen:

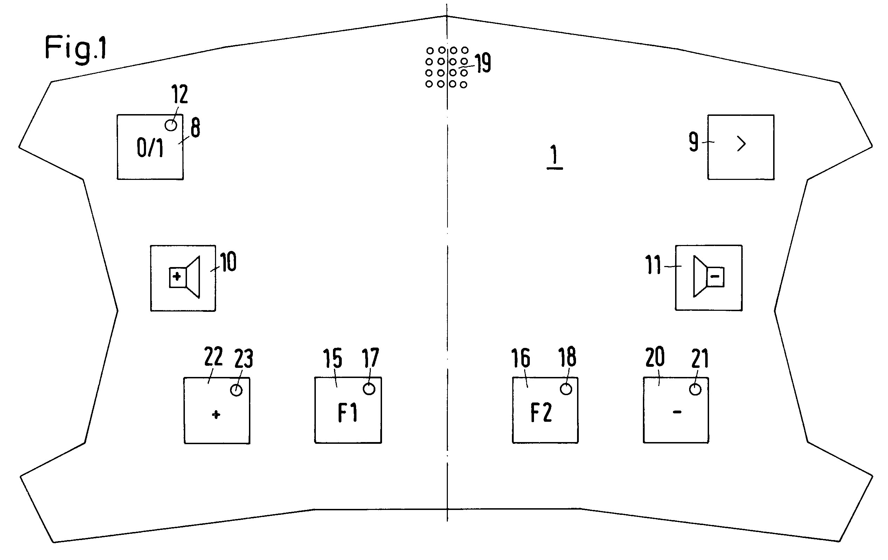

- Fig. 1: die Draufsicht auf die Vorderseite der Prallplatte eines Lenkrads und

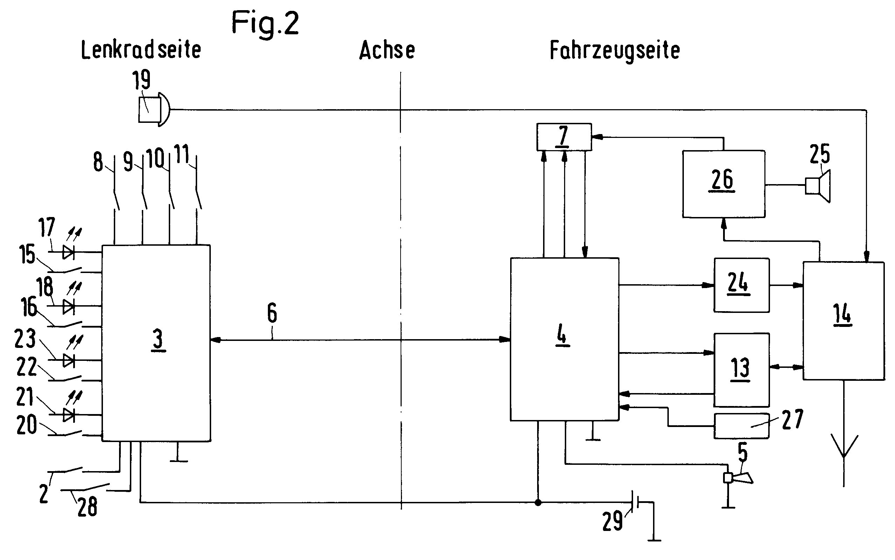

- Fig. 2: das Schaltbild für das Strom- und Datenübertragungssystem.

Mit der Prallplatte (1) des nicht dargestellten Lenkrads läßt sich der Schalter (2), dessen Ausgang direkt auf den entsprechenden Eingang des lenkradseitigen Interface-Moduls (3) geführt ist, betätigen, so daß der mit dem fahrzeugseitigen Interface-Modul (4) elektrisch verbundene akustische Signalgeber (5) ausgelöst wird, da die Interface-Module (4,5) über den seriellen Bus (6) miteinander kommunizieren.

Für das Auslösen der Einzelfunktionen der fahrzeugseitigen Rundfunkanlage (7) ist in der Prallplatte (1) jeweils ein Tastschalter (8,9,10,11) für das Ein-/Ausschalten (8), für den automatischen Sendersuchlauf (9), für die Erhöhung der Lautstärke (10) und für die Verringerung der Lautstärke (11) vorgesehen. Die Ausgänge dieser Tastschalter (8,9,10,11) sind direkt auf das lenkradseitige Interface-Modul (3) gelegt. Die Rundfunkanlage (7) ist mit den entsprechenden Ausgängen des fahrzeugseitigen Interface-Moduls (4) verbunden. Der Tastschalter (8) für das Ein-/Ausschalten der Rundfunkanlage (7) weist eine Leuchtdiode (12) auf.

Für die Bedienung der fahrzeugseitig installierten, mit dem Modem (13) verbundenen freisprechenden Funktelefonanlage (14) sind zwei mit dem Interface-Modul (3) verbundene Tastschalter (15,16) mit jeweils einer Leuchtdiode (17,18) vorgesehen, mit denen jeweils eine gespeicherte Telefonnummer aufrufbar ist. Das in der Lenkradplatte (1) befindliche Mikrofon (19) ist über den elektromechanischen Drehübertrager direkt mit der freisprechenden Funktelefonanlage (14) gekoppelt. Beim Betätigen einer der beiden Tastschalter (15,16) signalisiert jeweils die zugeordnete Leuchtdiode (17,18) die Bereitschaft des Aufrufs eines speziell für diesen Tastschalter (15,16) bereitgestellten Speicherplatzes. Nach Erlöschen der Leuchtdiode (17,18) wird die gespeicherte Telefonnummer automatisch direkt angewählt. Das Telefongespräch kann freisprechend übernommen werden. Das Abbrechen des Telefongesprächs wird mit dem in der Prallplatte (1) angeordneten Tastschalter (20) mit Leuchtdiode (21) ausgeführt, der beispielsweise zweimal kurz hintereinander betätigt werden muß. Dieser Vorgang muß sowohl beim Abbrechen des Telefongesprächs vom Kraftfahrzeug aus als auch beim Abbrechen des Telefongesprächs vom Außenteilnehmer erfolgen.

Bei gleichzeitiger Betätigung der beiden Tastschalter (15,16) wird automatisch ein Notruf ausgelöst.

Zur Herstellung einer direkten Freisprech-Telefonverbindung durch Aufruf des Namens, d.h. durch sprachgesteuertes Anwählen eines Gesprächsteilnehmers wird durch den in die Prallplatte (1) integrierten und auf das Interface-Modul (3) geführten Tastschalter (22) mit Leuchtdiode (23) ein Ringmenü angesteuert, das über den Bus (6) und das Interface-Modul (4) und eine galvanisch getrennte Schalteinrichtung (24) mit der Funktelefonanlage (14) kommuniziert. Durch Betätigen des Tastschalters (22) lassen sich die Menüpunkte, wie z.B. Sprachwahl, neue Einträge, Programmierfunktionen und Telefonbuch etc., im Uhrzeigersinn einzeln anwählen. Mit dem Tastschalter (20) lassen sich die Menüpunkte gegen den Uhrzeigersinn einzeln anwählen. Ausgangspunkt des Ringmenüs ist der Ruhezustand. Nach der Auswahl des Menüpunktes wird dieser bestätigt. Nach Anwahl des Menüpunktes, z.B. "Sprachwahl", erfolgt über den Steuerkopf (26) durch die Rundfunklautsprecher (25) die Aufforderung, den Namen des Gesprächsteilnehmers zu nennen. Der Name wird dann über die Rundfunklautsprecher (25) wiederholt. Der Gesprächsteilnehmer wird dann automatisch angewählt und das Gespräch freisprechend geführt. Durch Betätigung des Tastschalters (20) wird die Fernsprechverbindung unterbrochen und das Ringmenü verlassen. Der Ausgang des Sensors (27) für die im Lenkrad eingebaute Gassack-Aufprall-Schutzvorrichtung ist über das Interface-Modul (4) und das Interface-Modul (3) mit einem in der Prallplatte (1) befindlichen Zündkreis (28) verbunden. Das Daten-Übertragungssystem wird mit elektrischem Strom durch die Batterie (29), deren Ausgänge auf die Interface-Module (3,4) gelegt sind, versorgt.

Die mit der erfindungsgemäßen Vorrichtung erzielten Vorteile sind insbesondere darin zu sehen, daß vergleichsweise zahlreiche den Komfort des Kraftfahrzeugs betreffende Funktionen unmittelbar am Lenkrad ausgelöst werden können. Darüber hinaus lassen sich sicherheitsrelevante Funktionen ohne besonderen Aufwand an Hardware problemlos übertragen.

## Patentansprüche

1. Vorrichtung zur Übertragung von elektrischem Strom und Daten in bidirektioneller Flußrichtung zwischen der Lenkrad- und der Fahrzeugseite eines Kraftfahrzeugs mittels eines elektromechanischen Drehübertragers und mehrerer im Lenkrad integrierter Tastschalter mit ggf. zugeordneten Leuchtdioden, dadurch gekennzeichnet, daß der elektromechanische Drehübertrager jeweils einen Pol für die elektrische Stromversorgung, für die bidirektionelle Übertragung der Daten und für die Fahrzeugmasse umfaßt, auf der Lenkrad- und der Fahrzeugseite jeweils ein im wesentlichen aus einem Mikrocontroller und einem auf einem speziellen Kommunikationsprotokoll basierenden Bus (6), vorzugsweise CAN-BUS ASIC oder ABUS, bestehendes Interface-Modul (3,4) angeordnet ist, die Interface-Module durch den Bus miteinander kommunizieren, die Tastschalter (8,9,10,11,15,16,20,22) und Leuchtdioden (12,17,18,21,23,28) unmittelbar auf die entsprechenden Eingänge des lenkradseitigen Interface-Moduls und die Ausgänge des fahrzeugseitigen Interface-Moduls auf die entsprechenden Kommunikationspartner geführt sind.

2. Vorrichtung nach Anspruch 1, dadurch gekennzeichnet, daß im Lenkrad Tastschalter (8,9,10,11) für die Betätigung der Rundfunkanlage (7) angeordnet sind.

3. Vorrichtung nach einem der Ansprüche 1 und 2, dadurch gekennzeichnet, daß im Lenkrad ein Tastschalter für die Betätigung des akustischen Signalgebers (5) angeordnet ist.

4. Vorrichtung nach einem der Ansprüche 1 bis 3, dadurch gekennzeichnet, daß der elektromechanische Drehübertrager einen zusätzlichen Pol umfaßt, über den ein auf der Lenkradseite angeordnetes Mikrofon (19) mit einer auf der Fahrzeugseite eingebauten, mit den Rundfunklautsprechern (25) gekoppelten, freisprechenden Funktelefonanlage (14) verbunden ist.

5. Vorrichtung nach einem der Ansprüche 1 bis 4, dadurch gekennzeichnet, daß im Lenkrad wenigstens ein Tastschalter (15,16) für den Aufruf einer gespeicherten Telefonnummer eingebaut ist.

6. Vorrichtung nach einem der Ansprüche 1 bis 5, dadurch gekennzeichnet, daß im Lenkrad zwei jeweils ein Ringmenü steuernde Tastschalter (20,22) zur Herstellung einer Freisprech-Telefonverbindung durch Aufruf des Namens bzw. eines Codes eines Gesprächsteilnehmers angeordnet sind.

7. Vorrichtung nach einem der Ansprüche 1 bis 6, dadurch gekennzeichnet, daß die Tastschalter (8,9,10,11,15,16,20,22) und ggf. Leuchtdioden (12,17,18,21,23,28) in der Prallplatte (1) des Lenkrads eingebaut sind.

8. Vorrichtung nach einem der Ansprüche 1 bis 7, dadurch gekennzeichnet, daß das Mikrofon (19) in der Prallplatte (1) des Lenkrads eingebaut ist.

9. Vorrichtung nach einem der Ansprüche 1 bis 8, dadurch gekennzeichnet, daß die Prallplatte (1) als Schalter für den akustischen Signalgeber (5) ausgebildet ist.
